(19) Europäisches Patentamt
European Patent Office
Office européen des brevets

(11) **EP 4 317 816 A1**

(12) **EUROPEAN PATENT APPLICATION**
published in accordance with Art. 153(4) EPC

(43) Date of publication:
**07.02.2024 Bulletin 2024/06**

(51) International Patent Classification (IPC):
**F24F 11/30** (2018.01)    **F24F 11/46** (2018.01)
**F24F 11/64** (2018.01)    **F24F 7/007** (2006.01)

(21) Application number: **22780988.6**

(52) Cooperative Patent Classification (CPC):
**F24F 7/007; F24F 11/30; F24F 11/46; F24F 11/64**

(22) Date of filing: **29.03.2022**

(86) International application number:
**PCT/JP2022/015676**

(87) International publication number:
**WO 2022/210777 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.03.2021 JP 2021061762**

(71) Applicant: **Daikin Industries, Ltd.**
**Osaka-shi, Osaka 530-0001 (JP)**

(72) Inventors:
• **TSURUZONO, Shota**
  **Osaka-shi, Osaka 530-0001 (JP)**
• **ASHIKAGA, Tomoyoshi**
  **Osaka-shi, Osaka 530-0001 (JP)**
• **OHGA, Takahiro**
  **Osaka-shi, Osaka 530-0001 (JP)**

(74) Representative: **Global IP Europe
Patentanwaltskanzlei
Pfarrstraße 14
80538 München (DE)**

(54) **MACHINE LEARNING DEVICE, VENTILATION CONTROL DEVICE, AND VENTILATION CONTROL METHOD**

(57) A machine learning device (100) includes a first acquisition unit (10), a second acquisition unit (20), and a learning unit (30). The first acquisition unit (10) acquires environmental information on a target space (R1 to R3). The second acquisition unit (20) acquires number-of-people information indicating the number of people in the target space (R1 to R3). The learning unit (30) learns the environmental information acquired by the first acquisition unit (10) and the number-of-people information acquired by the second acquisition unit (20) in association with each other. The environmental information includes an actual carbon dioxide concentration in the target space (R1 to R3).

FIG. 1

EP 4 317 816 A1

**Description**

**TECHNICAL FIELD**

The present disclosure relates to a machine learning device, a ventilation control device, and a ventilation control method.

**BACKGROUND ART**

In the related art, the amount of carbon dioxide in a room is measured by a carbon dioxide sensor, and when the amount of carbon dioxide as a result of the measurement exceeds a predetermined value, the amount of ventilation air is controlled (Patent Literature 1 (Japanese Unexamined Patent Application Publication No. 2010-96382)).

**SUMMARY OF INVENTION**

Technical Problem

There is a problem in that when the amount of ventilation air is controlled based on the result of measuring the amount of carbon dioxide in a room using the carbon dioxide sensor, the amount of ventilation air may fail to be controlled appropriately, due to the carbon dioxide concentration further rising before the ventilation volume set for a ventilation device is reached.

Solution to Problem

A machine learning device according to a first aspect includes a first acquisition unit, a second acquisition unit, and a learning unit. The first acquisition unit acquires environmental information on a target space. The second acquisition unit acquires number-of-people information indicating the number of people in the target space. The learning unit learns the environmental information acquired by the first acquisition unit and the number-of-people information acquired by the second acquisition unit in association with each other. The environmental information includes an actual carbon dioxide concentration in the target space.

The machine learning device may create a carbon dioxide concentration estimation model that is specific to the target space and is usable for appropriate ventilation control in the target space.

A machine learning device according to a second aspect is the machine learning device according to the first aspect further including a prediction unit that predicts a carbon dioxide concentration in the target space after a certain period of time as a prediction value from the environmental information and the number-of-people information, based on a result of the learning by the learning unit.

The machine learning device predicts the carbon dioxide concentration after the certain period of time from the environmental information and the number-of-people information on the target space, based on a result of the learning by the learning unit. Thus, even when the environment or the number of people in the target space changes within a certain period of time, the machine learning device may estimate the carbon dioxide concentration specific to the target space with high accuracy.

A machine learning device according to a third aspect is the machine learning device according to the second aspect, in which the prediction unit predicts amount of change in a carbon dioxide concentration in the target space as the prediction value.

The machine learning device predicts the amount of change in the carbon dioxide concentration from the environmental information and the number-of-people information on the target space, based on a result of the learning by the learning unit. Thus, even when the environment or the number of people in the target space changes, the machine learning device may estimate the amount of change in the carbon dioxide concentration specific to the target space with high accuracy.

A machine learning device according to a fourth aspect is the machine learning device according to any one of the first aspect to the third aspect, in which the second acquisition unit further acquires biometric information on people in the target space. The learning unit further learns the biometric information acquired by the second acquisition unit in association.

The machine learning device uses, as input information, the biometric information on the people in the target space and thus may estimate the carbon dioxide concentration specific to the target space including the people with high accuracy.

A machine learning device according to a fifth aspect is the machine learning device according to the fourth aspect, in which the biometric information includes a conversation amount or a body temperature of the people in the target space.

The biometric information includes the conversation amount or the body temperature of the people in the target space, and thus the machine learning device may estimate the carbon dioxide concentration specific to the target space including the people with high accuracy.

A machine learning device according to a sixth aspect is the machine learning device according to the fourth aspect or the fifth aspect, in which the biometric information further includes gender, age, physique, or posture of the people in the target space.

The biometric information further includes the gender, age, physique, or posture of the people in the target space, and thus the machine learning device may estimate the carbon dioxide concentration specific to the target space including the people with high accuracy.

A machine learning device according to a seventh aspect is the machine learning device according to any one of the first aspect to the sixth aspect, in which the environmental information includes a carbon dioxide concentration of outside air, or opening or closing of a door or a window of the target space.

The environmental information includes the carbon dioxide concentration of the outside air or the opening or closing of the door or the window of the target space. Thus, even when ventilation of the target space is performed by the opening or closing of the door or the window, the machine learning device may estimate the carbon dioxide concentration specific to the target space with high accuracy.

A machine learning device according to an eighth aspect is the machine learning device according to the seventh aspect, in which the environmental information further includes a ventilation volume of the target space or a volume of the target space.

The environmental information further includes the ventilation volume of the target space or the volume of the target space, and thus the machine learning device may estimate the carbon dioxide concentration specific to the target space with high accuracy.

A ventilation control device according to a ninth aspect includes the machine learning device according to the second aspect and a control unit. The control unit controls a ventilating device installed in the target space, based on the prediction value of the carbon dioxide concentration in the target space after the certain period of time, the prediction value being an output from the prediction unit of the machine learning device.

Since the ventilation control device controls the ventilating device, based on the prediction value of the carbon dioxide concentration in the target space after the certain period of time, the ventilation control device may predict the carbon dioxide concentration in the target space after the certain period of time in advance to perform appropriate ventilation control on the target space.

A ventilation control device according to a tenth aspect includes a first prediction unit, a second prediction unit, and a control unit. The first prediction unit predicts a carbon dioxide concentration in a first target space after a certain period of time as a prediction value from environmental information and number-of-people information for the first target space, based on a result of the learning by the learning unit of the machine learning device according to the first aspect. The second prediction unit predicts a carbon dioxide concentration in a second target space after a certain period of time as a prediction value from environmental information and number-of-people information for the second target space, based on a result of the learning by the learning unit of the machine learning device according to the first aspect. The control unit controls a ventilating device installed in the first target space, based on the prediction value of the carbon dioxide concentration in the first target space after the certain period of time, the prediction value being an output from the first prediction unit. The control unit controls a ventilating device installed in the second target space, based on the prediction value of the carbon dioxide concentration in the second target space after the certain period of time, the prediction value being an output from the second prediction unit.

Since the ventilation control device includes the individual prediction units for the respective target spaces that predict the carbon dioxide concentrations in the respective target spaces after the certain period of time, the ventilation control device may predict the carbon dioxide concentration in each of the target spaces after the certain period of time in advance to perform appropriate ventilation control on each of the target spaces.

A ventilation control method according to an eleventh aspect includes a prediction step and a control step. In the prediction step, a carbon dioxide concentration in the target space after a certain period of time is predicted as a prediction value from the environmental information and the number-of-people information, based on a result of the learning by the learning unit of the machine learning device according to the first aspect. In the control step, a ventilating device installed in the target space is controlled based on the prediction value of the carbon dioxide concentration in the target space after the certain period of time, the prediction value being an output in the prediction step.

Since in the ventilation control method, the ventilating device is controlled based on the prediction value of the carbon dioxide concentration in the target space after the certain period of time, the carbon dioxide concentration in the target space after the certain period of time may be predicted in advance, so that appropriate ventilation control may be performed on the target space.

A ventilation control method according to a twelfth aspect includes a first prediction step, a second prediction step, and a control step. In the first prediction step, a carbon dioxide concentration in a first target space after a certain period of time is predicted as a prediction value from environmental information and number-of-people information for the first target space, based on a result of the learning by the learning unit of the machine learning device according to the first aspect. In the second prediction step, a carbon dioxide concentration in a second target space after a certain period of time is predicted as a prediction value from environmental information and number-of-people information for the second target space, based on a result of the learning by the learning unit of the machine learning device according to the first aspect. In the control step, a ventilating device installed in the first target space is controlled based on the prediction value of the carbon dioxide concentration in the first target space after the certain period of time, the prediction value being an output in the first prediction step. The control unit controls a ventilating device installed in the second target space, based on the prediction value of the carbon dioxide concentration in the second target space after the certain period of time, the prediction value being an output in the second prediction step.

Since in the ventilation control method, the individual prediction steps for the respective target spaces are included in which the carbon dioxide concentrations in the respective target spaces after the certain period of time are predicted, the carbon dioxide concentration in each of the target spaces after the certain period of time may be predicted in advance, so that appropriate ventilation control may be performed on each of the target space.

## BRIEF DESCRIPTION OF DRAWINGS

Fig. 1 is a functional block diagram of a machine learning device.
Fig. 2 is a functional block diagram of a ventilation control system.
Fig. 3 is a schematic view of a model of neurons in a neural network.
Fig. 4 is a diagram illustrating an example of learning data.
Fig. 5 is a diagram illustrating an example of changes in an actual value and a prediction value of a carbon dioxide concentration over time.
Fig. 6 is a flowchart for the ventilation control system.
Fig. 7 is a functional block diagram of a machine learning device.
Fig. 8 is a flowchart of a ventilation control system.
Fig. 9A is a diagram illustrating an example of a change in a prediction value of a carbon dioxide concentration over time.
Fig. 9B is a diagram illustrating an example of a change in the number of people in a room over time.
Fig. 9C is a diagram illustrating an example of a change in time required for reaching a threshold over time.
Fig. 10 is a functional block diagram of a machine learning device.
Fig. 11 is a functional block diagram of a ventilation control system.
Fig. 12 is a flowchart of the ventilation control system.

## DESCRIPTION OF EMBODIMENTS

<First embodiment>

(1) Overall configuration of ventilation control system

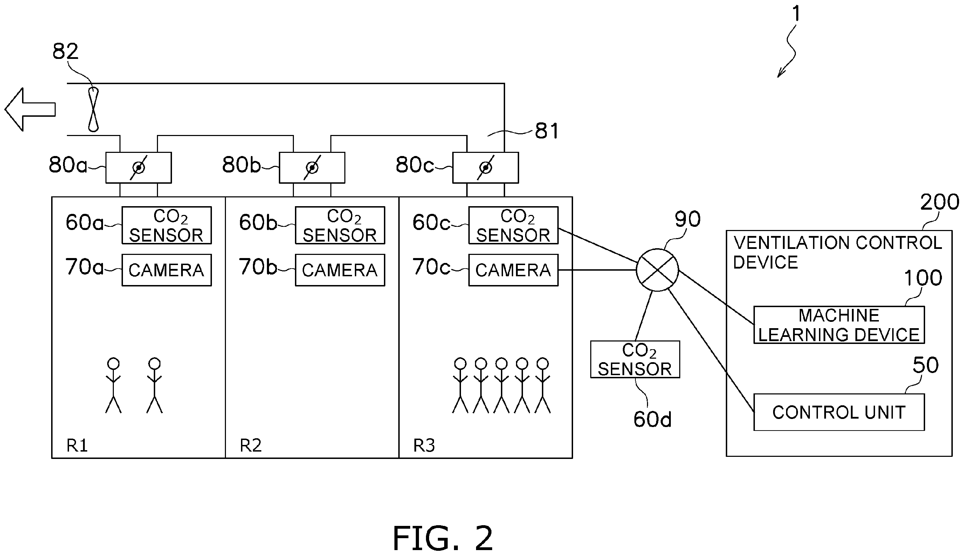

A ventilation control system 1 of the present embodiment is a system provided to perform ventilation control for rooms R1 to R3 that are target spaces. As illustrated in Fig. 2, the ventilation control system 1 mainly includes dampers 80a to 80c, a duct pipe 81, a fan 82, carbon-dioxide sensors 60a to 60d, cameras 70a to 70c, and a ventilation control device 200.

The ventilation control device 200 is implemented by a computer. The ventilation control device 200 includes a machine learning device 100 and a control unit 50.

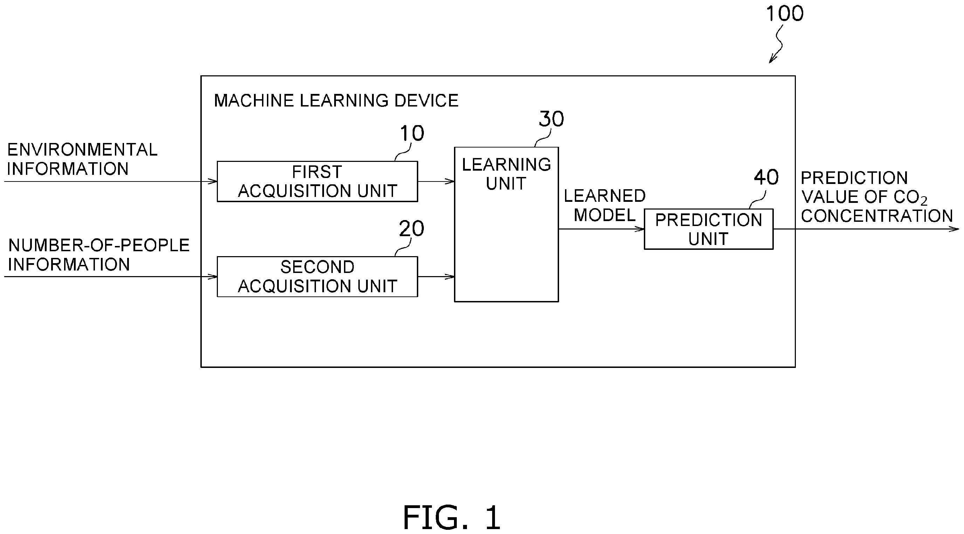

As illustrated in Fig. 1, the machine learning device 100 includes a first acquisition unit 10, a second acquisition unit 20, a learning unit 30, and a prediction unit 40. The first acquisition unit 10 acquires environmental information on the target spaces R1 to R3. The second acquisition unit 20 acquires number-of-people information indicating the numbers of people in the target spaces R1 to R3. The learning unit 30 learns the environmental information and the number-of-people information in association with each other. The prediction unit 40 predicts carbon dioxide concentrations in the target spaces R1 to R3 after a certain period of time as prediction values from the environmental information and the number-of-people information, based on a result of the learning by the learning unit 30.

The ventilation control device 200 controls the dampers 80a to 80c, based on the prediction values of the carbon dioxide concentrations in the rooms R1 to R3 after the certain period of time, the prediction values being outputs from the prediction unit 40 of the machine learning device 100.

The machine learning device 100 acquires actual carbon dioxide concentrations in the rooms R1 to R3 from the carbon dioxide sensors 60a to 60c installed in the rooms R1 to R3, over a network 90. Furthermore, the machine learning device 100 acquires an external carbon dioxide concentration from the carbon dioxide sensor 60d externally installed, over the network 90. Furthermore, the machine learning device 100 acquires the number-of-people information on the rooms R1 to R3 from the cameras 70a to 70c installed in the rooms R1 to R3, over the network 90.

(2) Detailed configuration

(2-1) Machine learning device

(2-1-1) First acquisition unit

The first acquisition unit 10 acquires the environmental information on the rooms R1 to R3 which are the target spaces. In the present embodiment, the environmental information includes the actual carbon dioxide concentrations in the target spaces R1 to R3. The environmental information on the target spaces R1 to R3 further includes a carbon dioxide concentration of the outside air and ventilation volumes of the target spaces R1 to R2 or volumes of the target spaces R1 to R3. The ventilation volumes of the target spaces R1 to R3 are ventilation volumes of the dampers 80a to 80c which are ventilating devices.

In the present embodiment, the first acquisition unit 10 acquires the actual carbon dioxide concentrations in the target spaces R1 to R3 by using the carbon dioxide concentration sensors 60a to 60c. The first acquisition unit 10 acquires the carbon dioxide concentration of the outside air by using the external carbon dioxide sensor 60d. The first acquisition unit 10 acquires the ventilation volumes of the dampers 80a to 80c, which are the ventilating devices, from a catalog or the like of the ventilating devices. The first acquisition unit 10 acquires the volumes of the target spaces R1 to R3 using a drawing.

(2-1-2) Second acquisition unit

The second acquisition unit 20 acquires the number-of-people information indicating the numbers of people in the rooms R1 to R3 which are the target spaces. In the present embodiment, the second acquisition unit 20 acquires the number-of-people information indicating the numbers of people in the rooms R1 to R3 by using the cameras 70a to 70c installed in the rooms R1 to R3. As illustrated in Fig. 2, the number of people in the room R1 is two. The number of people in the room R2 is zero. The number of people in the room R3 is five.

(2-1-3) Learning unit

The learning unit 30 learns the environmental information acquired by the first acquisition unit 10 and the number-of-people information acquired by the second acquisition unit 20 in association with each other. The learning unit 30 performs machine learning by using, as information, the environmental information and the number-of-people information that are different among the target spaces, and creates a carbon dioxide concentration estimation model expressed by Formula 1 below.

Formula 1:

$$\frac{\Delta C}{\Delta t} = \frac{(C_0 - C) * Qm}{V} * a + \frac{M_h * n}{V} * b$$

where

C: carbon dioxide concentration in room (ppm)
$C_o$: carbon dioxide concentration of outside air (ppm)
$Q_m$: ventilation volume of ventilating device (m$^3$/h)
V: room volume (m$^3$)
$M_h$: general carbon dioxide emission of people (m$^3$/h·persons)
N: number of people (persons)

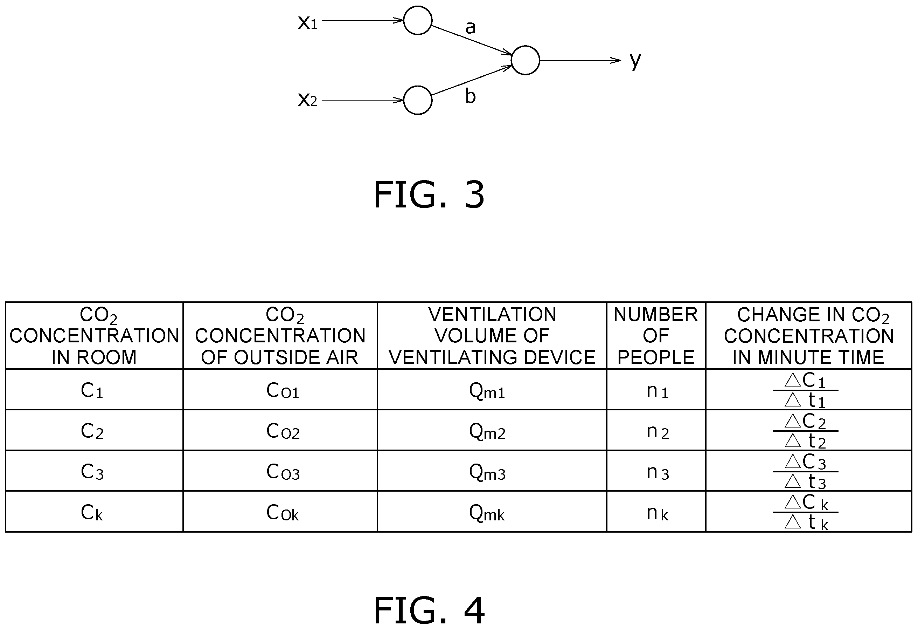

Fig. 3 is a schematic view of a model of neurons in a neural network. As illustrated in Fig. 3, the neurons output an output y in response to a plurality of inputs (inputs $x_1$ and $x_2$ in Fig. 3). Each input (inputs $x_1$ and $x_2$ in Fig. 3) is multiplied by a corresponding weight. A weight a corresponds to the input $x_1$. A weight b corresponds to the input $x_2$.

In the present embodiment, the input $x_1$ represents $(C_o - C) * Q_m / V$ which is a change in the carbon dioxide concentration caused by the ventilating device. The input $x_2$ indicates $M_h * n / V$ which is a change in the carbon dioxide concentration caused by people. The output y indicates $\Delta C / \Delta t$ (slope).

In the present embodiment, the weights (coefficients) a and b are learned through comparison between $\Delta C / \Delta t$ (slope) and actual values of the carbon dioxide concentration, using the steepest descent method. The values of the weights a and b are determined for each of the target spaces R1 to R3.

(2-1-4) Prediction unit

The prediction unit 40 predicts the carbon dioxide concentrations in the target spaces R1 to R3 after the certain period of time as prediction values from the environmental information and the number-of-people information on the target spaces R1 to R3, based on a result of the learning by the learning unit 30.

The prediction unit 40 predicts the carbon dioxide concentration in the target space R1 after the certain period of time as the prediction value using the carbon dioxide concentration estimation model (learned model) expressed by Formula 1 created through the learning by the learning unit 30 from the environmental information and the number-of-people information on the target space R1 as input information.

The prediction unit 40 predicts the carbon dioxide concentration in the target space R2 after the certain period of time as the prediction value using the carbon dioxide concentration estimation model expressed by Formula 1 created through the learning by the learning unit 30 from the environmental information and the number-of-people information on the target space R2 as input information.

The prediction unit 40 predicts the carbon dioxide concentration in the target space R3 after the certain period of time as the prediction value using the carbon dioxide concentration estimation model expressed by Formula 1 created through the learning by the learning unit 30 from the environmental information and the number-of-people information on the target space R3 as input information.

The prediction unit 40 may predict the carbon dioxide concentrations after the certain period of time, that is, after an elapse of time $\Delta t$, using $\Delta C / \Delta t$ in Formula 1.

(2-2) Control unit

The control unit 50 controls the dampers 80a to 80c installed in the target spaces R1 to R3, based on the prediction values of the carbon dioxide concentrations in the target spaces R1 to R3 after the certain period of time, the prediction values being outputs from the prediction unit 40 of the machine learning device 100.

The control unit 50 is implemented by a computer. The control unit 50 includes a control calculation device and a storage device (not illustrated). A processor such as a CPU or a GPU is usable for the control calculation device. The control calculation device reads a program stored in the storage device and executes predetermined image processing and calculation processing based on the program. Furthermore, based on the program, the control calculation device may write a calculation result to the storage device and read information stored in the storage device. The storage device is usable for a database.

(3) Learning processing

The learning unit 30 learns the environmental information, the number-of-people information, and the change in the carbon dioxide concentration in a minute time, as a learning data set. In the present embodiment, the environmental information includes the actual carbon dioxide concentrations in the rooms, the carbon dioxide concentration of the outside air, and the ventilation volumes of the ventilating devices. The number-of-people information is information indicating the number of people in a target space.

Fig. 4 illustrates an example of the learning data for the room R1. The room R1 is assumed to have a room volume V1 and has the damper 80a as the ventilating device. As illustrated in Fig. 4, learning is performed using a learning data set for outputting a carbon dioxide concentration $\Delta C_1 / \Delta t_1$ in a minute time, from inputs including a carbon dioxide concentration $C_1$ in the room, a carbon dioxide concentration $C_{o1}$ of the outside air, a ventilation volume $Q_{m1}$ of the ventilating device, and the number $n_1$ of people in the room R1. Furthermore, learning is performed using a learning data set for outputting a carbon dioxide concentration $\Delta C_2 / \Delta t_2$ in a minute time, from inputs including a carbon dioxide concentration $C_2$ in the room, a carbon dioxide concentration $C_{o2}$ of the outside air, a ventilation volume $Q_{m2}$ of the ventilating device, and the number $n_2$ of people in the room R1. Furthermore, learning is performed using a learning data set for outputting a carbon dioxide concentration $\Delta C_3 / \Delta t_3$ in a minute time, from inputs including a carbon dioxide

concentration $C_3$ in the room, a carbon dioxide concentration $C_{o3}$ of the outside air, a ventilation volume $Q_{m3}$ of the ventilating device, and the number $n_3$ of people in the room R1. Furthermore, learning is performed using a learning data set for outputting a carbon dioxide concentration $\Delta C_k/\Delta t_k$ in a minute time, from inputs including a carbon dioxide concentration $C_k$ in the room, a carbon dioxide concentration $C_{ok}$ of the outside air, a ventilation volume $Q_{mk}$ of the ventilating device, and the number $n_k$ of people in the room R1.

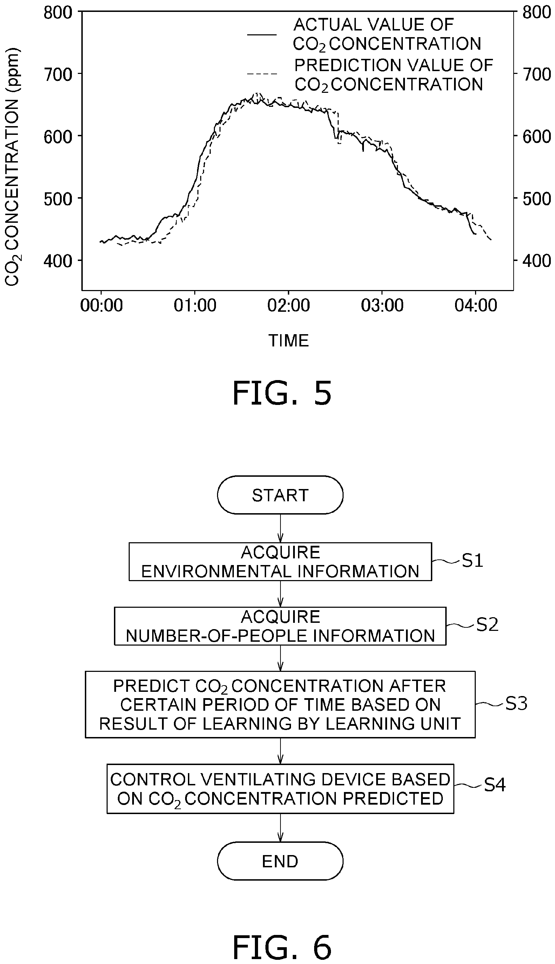

Fig. 5 illustrates an example of changes in the actual value and the prediction value of the carbon dioxide concentration in the target space R1 over time. A solid line indicates the actual value of the carbon dioxide concentration, and a dotted line indicates the prediction value of the carbon dioxide concentration. The prediction value is obtained by using the carbon dioxide concentration estimation model obtained by the learning using the learning data sets for the target space R1. The prediction value is obtained by predicting the carbon dioxide concentration after 10 minutes from a certain time point. When the carbon dioxide concentration estimation model obtained by the learning using the learning data sets for the target space R1 is used, a mean deviation and a standard deviation between the actual value and the prediction value of the carbon dioxide concentration in the target space R1 are respectively 9.3 ppm and 8.0 ppm.

On the other hand, when the carbon dioxide concentration estimation model obtained by the learning using learning data sets for another room is used for obtaining the prediction value of the carbon dioxide concentration in the target space R1, a mean deviation and a standard deviation of the carbon dioxide concentration in the target space R1 are respectively 12.2 ppm and 8.5 ppm, meaning that the accuracy of the prediction value of the carbon dioxide concentration decreases. Thus, it is preferable to create the carbon dioxide concentration estimation model from the environmental information and the number-of-people information that are data on the target space.

(4) Overall operation of ventilation control system

Fig. 6 is a flowchart for the ventilation control system 1.

First of all, in step S1, the environmental information on the target spaces R1 to R3 is acquired (step S1). The number-of-people information indicating the numbers of people in the target spaces R1 to R3 is acquired (step S2).

Next, the carbon dioxide concentrations in the target spaces R1 to R3 after a certain period of time are predicted based on a result of the learning by the learning unit 30 (step S3). In the present embodiment, the carbon dioxide concentrations in the target spaces R1 to R3 after 10 minutes are assumed to be predicted.

In step S3, the carbon dioxide concentration in the target space R1 after 10 minutes is predicted based on a result of the learning by the learning unit 30 using, as input information, the environmental information and the number-of-people information on the target space R1. Furthermore, the carbon dioxide concentration in the target space R2 after 10 minutes is predicted based on a result of the learning by the learning unit 30 using, as input information, the environmental information and the number-of-people information on the target space R2. Furthermore, the carbon dioxide concentration in the target space R3 after 10 minutes is predicted based on a result of the learning by the learning unit 30 using, as input information, the environmental information and the number-of-people information on the target space R3.

Next, the dampers 80a to 80c are controlled based on the carbon dioxide concentrations predicted in step S3 (step S4).

(5) Features

(5-1)
The machine learning device 100 of the present embodiment includes the first acquisition unit 10, the second acquisition unit 20, and the learning unit 30. The first acquisition unit 10 acquires the environmental information on the target spaces R1 to R3. The second acquisition unit 20 acquires the number-of-people information indicating the numbers of people in the target spaces R1 to R3. The learning unit 30 learns the environmental information acquired by the first acquisition unit 10 and the number-of-people information acquired by the second acquisition unit 20 in association with each other. The environmental information includes the actual carbon dioxide concentrations in the target spaces R1 to R3.

When the ventilation control is performed by monitoring the carbon dioxide concentration in real time to control the carbon dioxide concentration in a target space, the time required for starting the ventilating device and for data communication vary among properties. Thus, the carbon dioxide concentration may rise due to a sudden increase in the number of people in the room, an increase in the amount of speech, or the like, before the ventilation volume set for the ventilating device is reached. Furthermore, it takes time for the carbon dioxide concentration to diffuse after a person enters a target space. Thus, detection of a rise in the carbon dioxide concentration may be delayed.

The machine learning device 100 may create carbon dioxide concentration estimation models that are specific to the target spaces R1 to R3 and are usable for appropriate ventilation control in the target spaces R1 to R3. Thus, with the machine learning device 100 of the present embodiment, characteristics of the changes in the carbon dioxide concentrations, which differ among the target spaces, are recognized, so that the carbon dioxide concentrations may be estimated with high accuracy.

(5-2)

The machine learning device 100 of the present embodiment further includes the prediction unit 40 that predicts the carbon dioxide concentrations in the target spaces R1 to R3 after a certain period of time as prediction values from the environmental information and the number-of-people information, based on a result of the learning by the learning unit 30.

The machine learning device 100 predicts the carbon dioxide concentrations after the certain period of time from the environmental information and the number-of-people information on the target spaces R1 to R3, based on a result of the learning by the learning unit 30. Thus, even when the environments or the numbers of people in the target spaces R1 to R3 change within the certain period of time, the carbon dioxide concentrations specific to the target spaces R1 to R3 may be estimated with high accuracy.

(5-3)

In the machine learning device 100 according to the present embodiment, the environmental information further includes the ventilation volumes of the target spaces R1 to R3 or the volumes of the target spaces.

In the machine learning device 100, with the environmental information further including the ventilation volumes of the target spaces R1 to R3 or the volumes of the target spaces R1 to R3, the carbon dioxide concentrations specific to the target spaces R1 to R3 may be estimated with high accuracy.

(5-4)

The ventilation control device 200 of the present embodiment includes the machine learning device 100 and the control unit 50. The control unit 50 controls the ventilating devices 80a to 80c installed in the target spaces R1 to R3, based on the prediction values of the carbon dioxide concentrations in the target spaces R1 to R3 after the certain period of time, the prediction values being outputs from the prediction unit 40 of the machine learning device 100.

The Ministry of Health, Labour and Welfare has announced that the carbon dioxide concentration in a room not higher than 1000 ppm is one indication that the room is not a poorly ventilated enclosed space. On the other hand, due to the impact of infections, people are becoming more aware of enclosed spaces, resulting in excessive ventilation in some cases to suppress infection risks. As a result, the amount of energy consumption has increased due to factors such as an increase in the outside air load.

Since the ventilation control device 200 controls the ventilating devices 80a to 80c, based on the prediction values of the carbon dioxide concentrations in the target spaces R1 to R3 after the certain period of time, the carbon dioxide concentrations in the target spaces R1 to R3 after the certain period of time are predicted in advance, so that appropriate ventilation control may be performed on the target spaces R1 to R3. In addition, in the ventilation control device 200, the prediction values of the carbon dioxide concentrations in the target spaces R1 to R3 after the certain period of time are used to perform ventilation-associated operation in a feed-forward manner, and thus safety may be improved. Thus, both safety and energy conservation are achievable by performing necessary and sufficient ventilation to maintain the carbon dioxide concentrations at a certain set value or lower.

(5-5)

A ventilation control method by the ventilation control device 200 of the present embodiment includes a prediction step and a control step. In the prediction step, the carbon dioxide concentrations in the target spaces R1 to R3 after a certain period of time are predicted as prediction values from the environmental information and the number-of-people information, based on a result of the learning by the learning unit 30 of the machine learning device 100. In the control step, the ventilating devices installed in the target spaces R1 to R3 are controlled based on the prediction values of the carbon dioxide concentrations in the target spaces R1 to R3 after the certain period of time, the prediction values being outputs in the prediction step.

In the ventilation control method by the ventilation control device 200, since the ventilating devices are controlled based on the prediction values of the carbon dioxide concentrations in the target spaces R1 to R3 after the certain period of time, the carbon dioxide concentrations in the target spaces R1 to R3 after the certain period of time are predicted in advance, so that appropriate ventilation control may be performed on the target spaces R1 to R3.

(6) Modifications

(6-1) Modification 1A

In the present embodiment, a case where the prediction unit 40 predicts the carbon dioxide concentrations in the target spaces R1 to R3 after a certain period of time as prediction values is described. The prediction unit 40 may alternatively predict the amount of change in the carbon dioxide concentrations in the target spaces as a prediction value.

With the prediction unit predicting the amount of change in the carbon dioxide concentrations from the environmental information and the number-of-people information on the target spaces R1 to R3, based on a result of the learning by the learning unit, even when the environments or the numbers of people in the target spaces R1 to R3 change, the amount of change in the carbon dioxide concentrations specific to the target spaces R1 to R3 may be estimated with high accuracy.

(6-2) Modification 1B

In the present embodiment, a case where the prediction unit 40 predicts the carbon dioxide concentrations in the target spaces R1 to R3 after a certain period of time as prediction values is described. The prediction unit 40 may also predict the carbon dioxide concentrations in the target spaces R1 to R3 in a steady state.

Based on input information on the target space at a certain time point, the prediction unit 40 may calculate and predict a concentration (carbon dioxide concentration in the steady state) at which the carbon dioxide concentration is maximized in the input information. For example, a value C in Formula 1 when $\Delta C/\Delta t = 0$, obtained using the environmental information and the number-of-people information on the target space at a certain time point, serves as the prediction value of the carbon dioxide concentration in the target space in the steady state.

In this way, how much the carbon dioxide concentration will rise may be predicted in advance using the input information such as the number-of-people information.

(6-3) Modification 1C

In the present embodiment, a case where the environmental information is the carbon dioxide concentration of the outside air and the ventilation volumes of the target spaces or the volumes of the target spaces is described, but this is not construed in a limiting sense. The environmental information may be opening or closing of a door or a window of the target space.

With the environmental information including the opening or closing of a door or a window of the target spaces R1 to R3, even when ventilation of the target spaces R1 to R3 is performed by the opening or closing of the door or the window, the carbon dioxide concentrations specific to the target spaces R1 to R3 may be predicted with high accuracy.

By using the carbon dioxide concentration estimation model for each of the target spaces R1 to R3, for example, the carbon dioxide concentration is predicted in a case where input information such as the ventilation volume or the opening or closing of the window changes, so that an action for setting the carbon dioxide concentration to be equal to or lower than a predetermined carbon dioxide concentration, such as opening the window, may be proposed.

In the present embodiment, a case where the first acquisition unit 10 acquires the carbon dioxide concentration of the outside air by using the external carbon dioxide sensor 60d is described, but this is not construed in a limiting sense. For example, when the carbon dioxide concentration of the outside air is not able to be acquired, a value of 420 ppm, which is the carbon dioxide concentration generally contained in the atmosphere, may be used as the value of the carbon dioxide concentration of the outside air.

(6-4) Modification 1D

In the present embodiment, a case where the second acquisition unit 20 acquires the number-of-people information is described, but this is not construed in a limiting sense. For example, the second acquisition unit may further acquire biometric information on people in the target space.

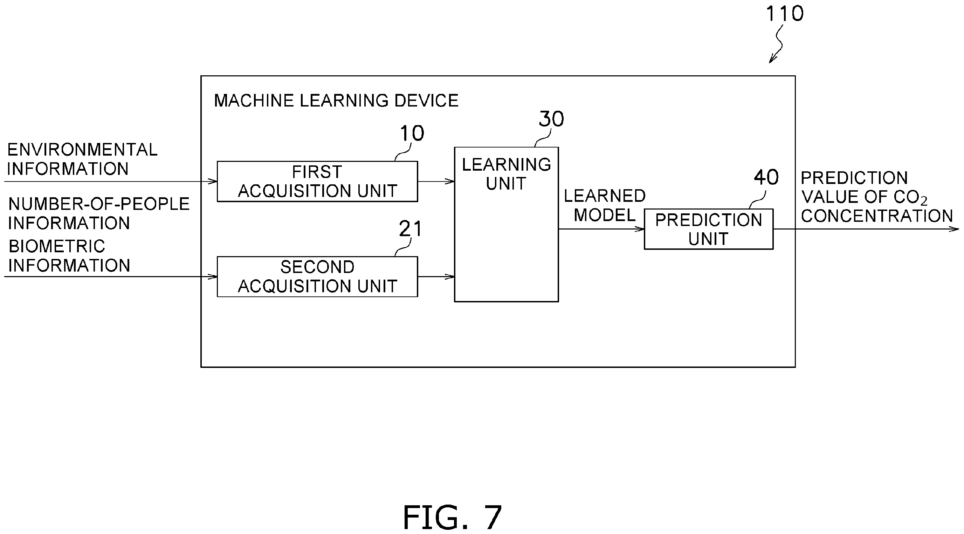

Fig. 7 is a functional block diagram of a machine learning device 110 of Modification 1D.

As illustrated in Fig. 7, the machine learning device 110 includes the first acquisition unit 10, a second acquisition unit 21, the learning unit 30, and the prediction unit 40. The first acquisition unit 10 acquires the environmental information on the target spaces R1 to R3. The second acquisition unit 21 acquires the number-of-people information indicating the numbers of people in the target spaces R1 to R3 and biometric information on the people in the target spaces R1 to R3. The learning unit 30 learns the environmental information, the number-of-people information, and the biometric information in association with each other. The prediction unit 40 predicts the carbon dioxide concentrations in the target spaces R1 to R3 after a certain period of time as prediction values from the environmental information, the number-of-people information, and the biometric information, based on a result of the learning by the learning unit 30.

The biometric information may include the conversation amount or the body temperature of the people in the target spaces R1 to R3. The biometric information may further include the gender, age, physique, or posture of the people in the target spaces R1 to R3.

The second acquisition unit 21 acquires the conversation amount of the people using, for example, a sound sensor. The second acquisition unit 21 acquires the body temperature of the people using a thermosensor. The second acquisition unit 21 acquires the gender, age, physique, or posture of people using a camera.

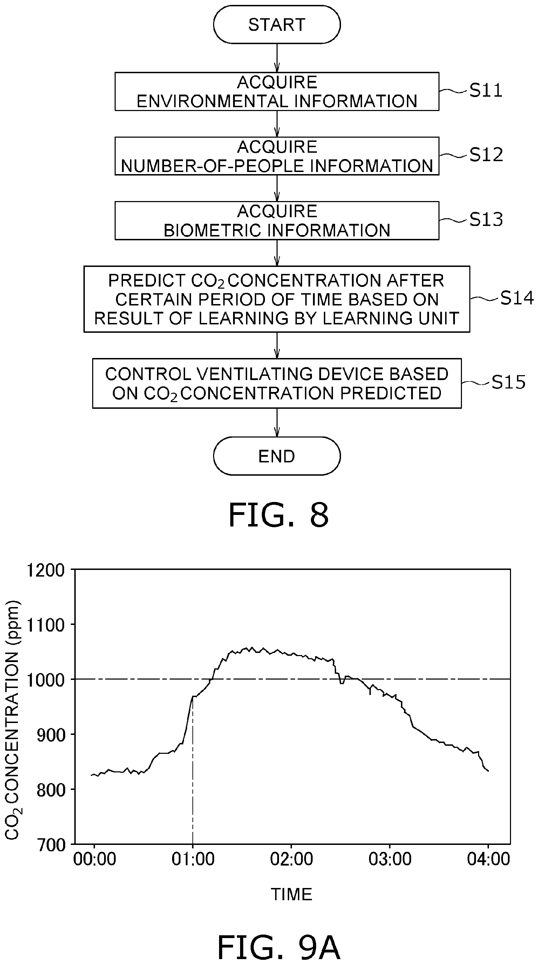

Fig. 8 is a flowchart of a ventilation control system of Modification 1D.

First of all, in step S1, the environmental information on the target spaces R1 to R3 is acquired (step S11). The number-of-people information indicating the numbers of people in the target spaces R1 to R3 is acquired (step S12). Next, the biometric information on the people in the target spaces R1 to R3 is acquired (step S13). Next, the carbon dioxide concentrations in the target spaces R1 to R3 after a certain period of time are predicted based on a result of the learning by the learning unit 30 (step S14). The dampers 80a to 80c are controlled based on the carbon dioxide concentrations predicted in step S14 (step S15).

The machine learning device 110 of Modification 1D further uses, as the input information, the biometric information on the people in the target spaces, whereby the carbon dioxide concentrations specific to the target spaces R1 to R3 including the people may be estimated with high accuracy.

With the machine learning device 110, the biometric information includes the conversation amount or the body temperature of the people in the target spaces. Thus, even in a case where the carbon dioxide concentration rises due to an increase in the conversation amount of people in the target spaces R1 to R3, the carbon dioxide concentrations specific to the target spaces R1 to R3 including the people may be estimated with high accuracy.

With the machine learning device 110, the biometric information further includes the gender, age, physique, or posture of the people in the target spaces R1 to R3, whereby the carbon dioxide concentrations specific to the target spaces R1 to R3 including the people may be estimated with high accuracy.

(6-5) Modification 1E

In the present embodiment, a case where the first acquisition unit 10 acquires the volumes of the target spaces R1 to R3 using a drawing is described, but this is not construed in a limiting sense.

The volume of the target space may also be estimated using the number-of-people information in the target space, the carbon dioxide concentration in the room, the carbon dioxide concentration in the outside air, and the ventilation volume of the ventilating device. For example, when the number of people in the target space is zero, the volume of the target space may be estimated from a reduction in the carbon dioxide concentration in the target space between a certain time point t1 and a time point t2 different from t1.

(6-6) Modification 1F

The carbon dioxide concentrations in a case where the target spaces R1 to R3 include people may be estimated when the control unit 50 of the ventilation control device 200 controls the ventilating devices 80a to 80c, to perform ventilation control to maintain the carbon dioxide concentrations at a threshold or lower.

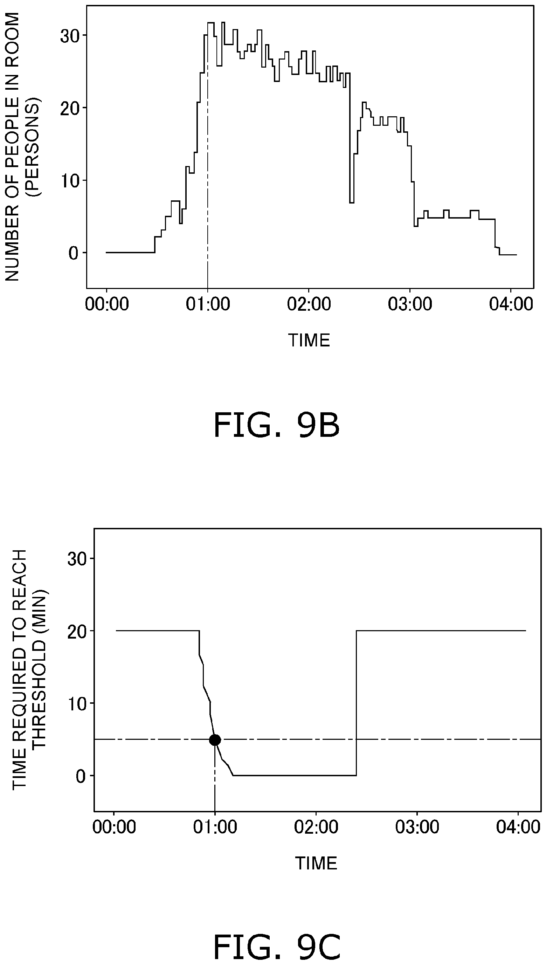

Fig. 9A illustrates an example of a change in the prediction value of the carbon dioxide concentration in the target space R1 over time. Fig. 9B illustrates an example of a change in the number of people in the target space R1 over time. Fig. 9C illustrates an example of a change in the time required for the carbon dioxide concentration in the target space R1 to reach the threshold over time.

The threshold of the carbon dioxide concentration is assumed to be 1000 ppm. When the estimated carbon dioxide concentration in the steady state is equal to or lower than the threshold, the time required for the carbon dioxide concentration to reach the threshold is set to 20 minute. The ventilation control is performed when the time required for the prediction value of the carbon dioxide concentration in the target space R1 to reach the threshold is five minutes or less.

For example, as illustrated in Fig. 9B, the number of people in the target space R1 is 0 at 0:00 and 30 at 1:00.

At 0:00, the actual value of the carbon dioxide concentration in the target space R1 is about 820 ppm. Thereafter, as illustrated in Fig. 9A, the prediction value of the carbon dioxide concentration in the target space R1 is about 958 ppm at 1:00. Thus, the carbon dioxide concentration in the target space R1 is estimated to rise from 0:00 to 1:00. As illustrated in Fig. 9C, the time required for the prediction value of the carbon dioxide concentration in the target space R1 to reach the threshold becomes short between 0:00 and 1:00, and the time required for reaching the threshold is five minutes at 1:00. Thereafter, as illustrated in Fig. 9A, the prediction value of the carbon dioxide concentration in the target space R1 further rises and exceeds the threshold, which is 1000 ppm, until about 2:30. Between 1:00 to about 2:30, as illustrated in Fig. 9C, the time required for the prediction value of the carbon dioxide concentration in the target space R1 to reach the threshold is 5 minutes or less. Therefore, the ventilation control is performed on the target space R1 from 1:00 to about 2:30.

With the carbon dioxide concentration in a case where the target space includes people thus estimated, both safety and energy conservation are achievable by performing ventilation control to maintain the carbon dioxide concentration at the threshold or lower.

Furthermore, a change in the carbon dioxide concentration in the target space may be displayed on a display by using the prediction value of the carbon dioxide concentration in the target space output from the prediction unit 40, which enables a user of the target space to recognize the change in the carbon dioxide concentration. For example, as the change in the carbon dioxide concentration in the target space, the display may display the time required for the prediction value of the carbon dioxide concentration in the target space to reach a predetermined set value. The change in the carbon dioxide concentration in the target space is not limited to a case where the carbon dioxide concentration in the target space rises, and also includes a case where the carbon dioxide concentration in the target space drops.

(6-7) Modification 1G

In the present embodiment, a case where the learning unit 30 performs machine learning using a supervised neural network to create the carbon dioxide concentration estimation model is described, but this is not construed in a limiting sense. Alternatively, as the machine learning method, linear regression, deep learning, long short term memory (LSTM), or the like may be used.

<Second embodiment>

(1) Overall configuration

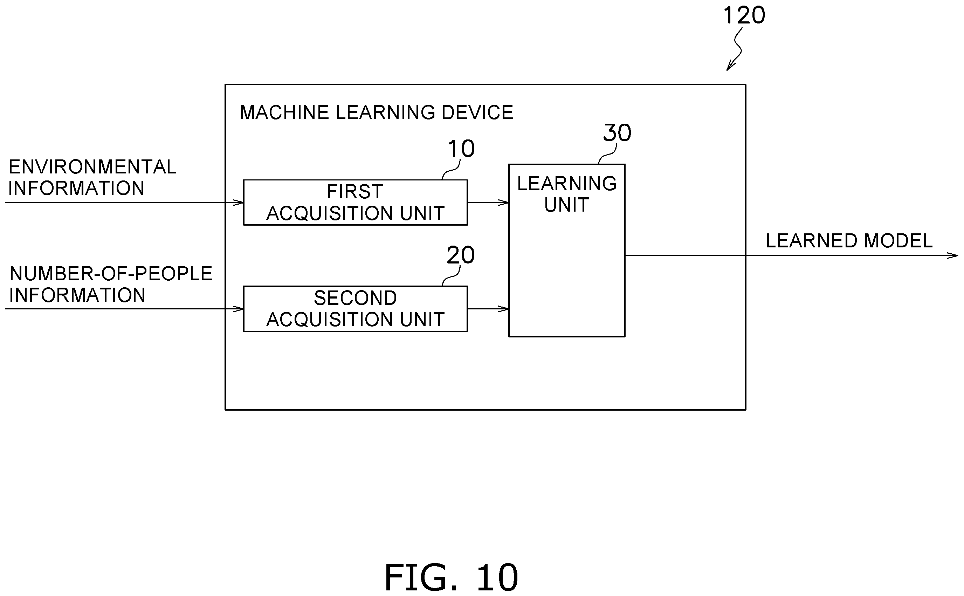

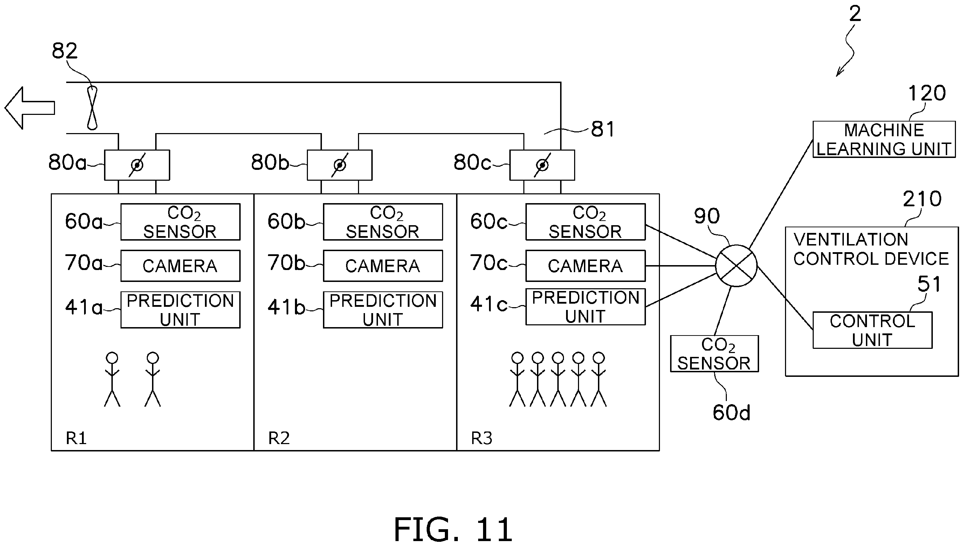

A ventilation control system 2 of the present embodiment is a system provided to perform ventilation control for rooms R1 to R3. As illustrated in Fig. 11, the ventilation control system 2 mainly includes dampers 80a to 80c, a duct pipe 81, a fan 82, carbon-dioxide sensors 60a to 60d, cameras 70a to 70c, prediction units 41a to 41c, a machine learning device 120, and a ventilation control device 210.
The ventilation control device 210 is implemented by a computer. The ventilation control device 200 includes a control unit 51.
As illustrated in Fig. 10, the machine learning device 120 includes the first acquisition unit 10, the second acquisition unit 20, and the learning unit 30. The first acquisition unit 10 acquires environmental information on the target spaces R1 to R3. The second acquisition unit 20 acquires number-of-people information indicating the numbers of people in the target spaces R1 to R3. The learning unit 30 learns the environmental information and the number-of-people information in association with each other.
The prediction units 41a to 41c are provided in the rooms R1 to R3. The prediction units 41a to 41c include learned models as a result of the learning by the machine learning device 120. The prediction units 41a to 41c predict the carbon dioxide concentrations in the target spaces R1 to R3 after a certain period of time as prediction values from the environmental information and the number-of-people information, based on a result of the learning by the learning unit 30 of the machine learning device 120.
The ventilation control device 210 controls the dampers 80a to 80c, based on the prediction values of the carbon dioxide concentrations in the rooms R1 to R3 after the certain period of time, the prediction values being outputs from the prediction units 41a to 41c.
The machine learning device 120 acquires the actual carbon dioxide concentrations in the rooms R1 to R3 from the carbon dioxide sensors 60a to 60c installed in the rooms R1 to R3, over a network 90. Furthermore, the machine learning device 100 acquires an external carbon dioxide concentration from a carbon dioxide sensor 60d externally installed, over the network 90. Furthermore, the machine learning device 100 acquires the number-of-people information on the rooms R1 to R3 from the cameras 70a to 70c installed in the rooms R1 to R3, over the network 90.

(2) Detailed configuration

(2-1) Machine learning device

As illustrated in Fig. 10, the machine learning device 120 includes the first acquisition unit 10, the second acquisition unit 20, and the learning unit 30. Since the configurations of the first acquisition unit 10, the second acquisition unit 20, and the learning unit 30 are the same as those in the first embodiment, a detailed description thereof will be omitted.

(2-2) Prediction unit

The prediction unit 41a is installed in the target space R1. The prediction unit 41a predicts, for the target space R1, the carbon dioxide concentration in the target space R1 after a certain period of time as a prediction value from the environmental information and the number-of-people information on the target space R1, based on a result of the learning by the learning unit 30 of the machine learning device 120.
The prediction unit 41b is installed in the target space R2. The prediction unit 41b predicts, for the target space R2, the carbon dioxide concentration in the target space R2 after a certain period of time as a prediction value from the environmental information and the number-of-people information on the target space R2, based on a result of the learning by the learning unit 30 of the machine learning device 120.
The prediction unit 41c is installed in the target space R3. The prediction unit 41c predicts, for the target space R3, the carbon dioxide concentration in the target space R3 after a certain period of time as a prediction value from the environmental information and the number-of-people information on the target space R3, based on a result of the learning by the learning unit 30 of the machine learning device 120.

(2-3) Control unit

The control unit 51 controls the damper 80a installed in the target space R1, based on the prediction value of the carbon dioxide concentration in the target space R1 after the certain period of time, the prediction value being an output from the prediction unit 41a. The control unit 51 controls the damper 80b installed in the target space R2, based on the prediction value of the carbon dioxide concentration in the target space R2 after the certain period of time, the prediction value being an output from the prediction unit 41b. The control unit 51 controls the damper 80c installed in the target space R3, based on the prediction value of the carbon dioxide concentration in the target space R3 after the certain period of time, the prediction value being an output from the prediction unit 41c.

The control unit 51 is implemented by a computer. The control unit 51 includes a control calculation device and a storage device (not illustrated). A processor such as a CPU or a GPU is usable for the control calculation device. The control calculation device reads a program stored in the storage device and executes predetermined image processing and calculation processing based on the program. Furthermore, based on the program, the control calculation device may write a calculation result to the storage device and read information stored in the storage device. The storage device is usable for a database.

(3) Overall operation

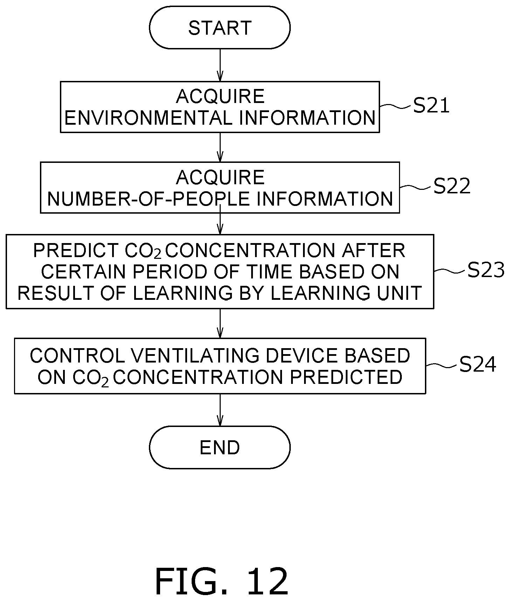

Fig. 12 is a flowchart of the ventilation control system 2. Since the processing is substantially the same as that in the first embodiment illustrated in Fig. 6, a detailed description thereof will be omitted. In the first embodiment, in step S3, the carbon dioxide concentrations after a certain period of time are predicted using the prediction unit 40 of the machine learning device 100. The second embodiment is different from the first embodiment in that, in step S23, the carbon dioxide concentrations are predicted using the prediction units 41a to 41c respectively provided in the target spaces R1 to R3.

(4) Features

(4-1)
The ventilation control device 210 of the present embodiment includes the first prediction unit 41a, the second prediction unit 41b, the third prediction unit 41c, and the control unit 50. The first prediction unit 41a predicts, for the first target space R1, the carbon dioxide concentration in the first target space R1 after a certain period of time as a prediction value from the environmental information and the number-of-people information, based on a result of the learning by the learning unit 30 of the machine learning device 120. The second prediction unit 41b predicts, for the second target space R2, the carbon dioxide concentration in the second target space R2 after a certain period of time as a prediction value from the environmental information and the number-of-people information, based on a result of the learning by the learning unit 30 of the machine learning device 120. The third prediction unit 41c predicts, for the third target space R3, the carbon dioxide concentration in the third target space R3 after a certain period of time as a prediction value from the environmental information and the number-of-people information, based on a result of the learning by the learning unit 30 of the machine learning device 120. The control unit 51 controls the ventilating device 80a installed in the first target space R1, based on the prediction value of the carbon dioxide concentration in the first target space R1 after the certain period of time, the prediction value being an output from the first prediction unit 41a. The control unit 51 controls the ventilating device 80b installed in the second target space R2, based on the prediction value of the carbon dioxide concentration in the second target space R2 after the certain period of time, the prediction value being an output from the second prediction unit 41b. The control unit 51 controls the ventilating device 80c installed in the third target space R3, based on the prediction value of the carbon dioxide concentration in the third target space R3 after the certain period of time, the prediction value being an output from the third prediction unit 41c.

With the ventilation control device 210, since the target spaces R1 to R3 are provided with the individual prediction units 41a to 41c that predict the carbon dioxide concentrations in the respective target spaces R1 to R3 after the certain period of time, the carbon dioxide concentration in each of the target spaces R1 to R3 after the certain period of time is predicted in advance, so that appropriate ventilation control may be performed on each of the target spaces R1 to R3.

(4-2)
A ventilation control method performed by the ventilation control device 210 of the present embodiment includes a first prediction step, a second prediction step, a third prediction step, and a control step. In the first prediction step, for the first target space R1, the carbon dioxide concentration in the first target space R1 after a certain period of time is predicted as a prediction value from the environmental information and the number-of-people information, based on a result of the learning by the learning unit 30 of the machine learning device 120. In the second prediction step, for the second target space R2, the carbon dioxide concentration in the second target space R2 after a certain period of time is predicted as a prediction value from the environmental information and the number-of-people information, based on a result of the learning by the learning unit 30 of the machine learning device 120. In the third prediction step, for the third target space R3, the carbon dioxide concentration in the third target space R3 after a certain period of time is predicted as a prediction value from the environmental information and the number-of-people information, based on a result of the learning by the learning unit 30 of the machine learning device 120. In the control step, the ventilating device installed in the first target space R1 is controlled based on the prediction value of the carbon dioxide concentration in the first target space R1 after the certain period of time, the prediction value being an output in the first prediction step. In the control step, the ventilating device installed in the second target space R2 is controlled based on the prediction value of the carbon dioxide concentration in the second target space R2 after the certain period of time, the prediction value being an output in the second prediction step. In the control step, the ventilating device installed in the third target space R3 is controlled based on the prediction value of the carbon dioxide concentration in the third target space R3 after the certain period of time, the prediction value being an output in the third prediction step.

With the ventilation control method by the ventilation control device 210, since the target spaces R1 to R3 are provided with the individual prediction steps of predicting the carbon dioxide concentrations in the respective target spaces R1 to R3 after the certain period of time, the carbon dioxide concentration in each of the target spaces R1 to R3 after the certain period of time is predicted in advance, so that appropriate ventilation control may be performed on each of the target spaces R1 to R3.

(5) Modifications

(5-1) Modification 2A

In the present embodiment, a case where the three rooms include the first to third prediction units 41a to 41b is described, but this is not construed in a limiting sense. For example, the prediction unit may be provided in each of two or more rooms. Alternatively, the target space may be a single room, and the prediction unit may be provided in one target space.

(5-2) Modification 2B

While embodiments of the present disclosure have been described above, it should be understood that various changes in mode and detail may be made without departing from the spirit and scope of the present disclosure as set forth in the claims.

REFERENCE SIGNS LIST

    1, 2 Ventilation control system
    100, 110, 120 Machine learning device
    200, 210 Ventilation control device
    10 First acquisition unit
    20, 21 Second acquisition unit
    30 Learning unit
    40, 41a to 41c Prediction unit
    50, 51 Control unit
    60a to 60d Carbon dioxide sensor
    70a to 70c Camera
    80a to 80c Damper (ventilating device)
    81 Duct pipe
    82 Fan
    90 Network

CITATION LIST

PATENT LITERATURE

PTL 1: Japanese Unexamined Patent Application Publication No. 2010-96382

**Claims**

1.  A machine learning device (100, 110, 120) comprising:

    a first acquisition unit (10) configured to acquire environmental information on a target space;
    a second acquisition unit (20, 21) configured to acquire number-of-people information indicating number of people in the target space; and
    a learning unit (30) configured to learn the environmental information acquired by the first acquisition unit and the number-of-people information acquired by the second acquisition unit in association with each other, wherein
    the environmental information includes an actual carbon dioxide concentration in the target space.

2.  The machine learning device according to claim 1 further comprising a prediction unit (40, 41a to 41c) configured to predict a carbon dioxide concentration in the target space after a certain period of time as a prediction value from the environmental information and the number-of-people information, based on a result of learning by the learning unit.

3.  The machine learning device according to claim 2, wherein the prediction unit predicts amount of change in a carbon dioxide concentration in the target space as the prediction value.

4.  The machine learning device according to any one of claims 1 to 3, wherein

    the second acquisition unit further acquires biometric information on people in the target space, and
    the learning unit further learns the biometric information acquired by the second acquisition unit in association.

5.  The machine learning device according to claim 4, wherein the biometric information includes a conversation amount or a body temperature of the people in the target space.

6.  The machine learning device according to claim 4 or 5, wherein the biometric information further includes gender, age, physique, or posture of the people in the target space.

7.  The machine learning device according to any one of claims 1 to 6, wherein the environmental information includes a carbon dioxide concentration of outside air, or opening or closing of a door or a window of the target space.

8.  The machine learning device according to claim 7, wherein the environmental information further includes a ventilation volume of the target space or a volume of the target space.

9.  A ventilation control device (200) comprising:

    the machine learning device according to claim 2; and
    a control unit (50) configured to control a ventilating device installed in the target space, based on the prediction value of the carbon dioxide concentration in the target space after the certain period of time, the prediction value being an output from the prediction unit of the machine learning device.

10. A ventilation control device (210) comprising:

    a first prediction unit configured to predict a carbon dioxide concentration in a first target space after a certain period of time as a prediction value from the environmental information and the number-of-people information of the first target space, based on a result of learning by the learning unit of the machine learning device according to claim 1;
    a second prediction unit configured to predict a carbon dioxide concentration in a second target space after a certain period of time as a prediction value from the environmental information and the number-of-people information of the second target space, based on a result of learning by the learning unit of the machine learning device according to claim 1; and
    a control unit (51) configured to control a ventilating device installed in the first target space, based on the prediction value of the carbon dioxide concentration in the first target space after the certain period of time, the prediction value being an output from the first prediction unit, and control a ventilating device installed in the second target space, based on the prediction value of the carbon dioxide concentration in the second target space after the certain period of time, the prediction value being an output from the second prediction unit.

**11.** A ventilation control method comprising:

a prediction step of predicting a carbon dioxide concentration in the target space after a certain period of time as a prediction value from the environmental information and the number-of-people information, based on a result of learning by the learning unit of the machine learning device according to claim 1; and a control step of controlling a ventilating device installed in the target space, based on the prediction value of the carbon dioxide concentration in the target space after the certain period of time, the prediction value being an output in the prediction step.

**12.** A ventilation control method comprising:

a first prediction step of predicting a carbon dioxide concentration in a first target space after a certain period of time as a prediction value from the environmental information and the number-of-people information of the first target space, based on a result of learning by the learning unit of the machine learning device according to claim 1; a second prediction step of predicting a carbon dioxide concentration in a second target space after a certain period of time as a prediction value from the environmental information and the number-of-people information of the second target space, based on a result of learning by the learning unit of the machine learning device according to claim 1; and a control step of controlling a ventilating device installed in the first target space, based on the prediction value of the carbon dioxide concentration in the first target space after the certain period of time, the prediction value being an output in the first prediction step, and controlling a ventilating device installed in the second target space, based on the prediction value of the carbon dioxide concentration in the second target space after the certain period of time, the prediction value being an output in the second prediction step.

MACHINE LEARNING DEVICE

ENVIRONMENTAL
INFORMATION

NUMBER-OF-PEOPLE
INFORMATION

FIRST
ACQUISITION UNIT
*10*

SECOND
ACQUISITION UNIT
*20*

LEARNING
UNIT
*30*

LEARNED
MODEL

PREDICTION
UNIT
*40*

PREDICTION
VALUE OF $CO_2$
CONCENTRATION

*100*

FIG. 1

FIG. 2

FIG. 3

| $CO_2$ CONCENTRATION IN ROOM | $CO_2$ CONCENTRATION OF OUTSIDE AIR | VENTILATION VOLUME OF VENTILATING DEVICE | NUMBER OF PEOPLE | CHANGE IN $CO_2$ CONCENTRATION IN MINUTE TIME |
|---|---|---|---|---|
| $C_1$ | $C_{o1}$ | $Q_{m1}$ | $n_1$ | $\dfrac{\triangle C_1}{\triangle t_1}$ |
| $C_2$ | $C_{o2}$ | $Q_{m2}$ | $n_2$ | $\dfrac{\triangle C_2}{\triangle t_2}$ |
| $C_3$ | $C_{o3}$ | $Q_{m3}$ | $n_3$ | $\dfrac{\triangle C_3}{\triangle t_3}$ |
| $C_k$ | $C_{ok}$ | $Q_{mk}$ | $n_k$ | $\dfrac{\triangle C_k}{\triangle t_k}$ |

FIG. 4

FIG. 5

FIG. 6

MACHINE LEARNING DEVICE

ENVIRONMENTAL
INFORMATION

NUMBER-OF-PEOPLE
INFORMATION
BIOMETRIC
INFORMATION

110

10
FIRST
ACQUISITION UNIT

30
LEARNING
UNIT

LEARNED
MODEL

40
PREDICTION
UNIT

PREDICTION
VALUE OF $CO_2$
CONCENTRATION

21
SECOND
ACQUISITION UNIT

FIG. 7

START

ACQUIRE
ENVIRONMENTAL INFORMATION — S11

ACQUIRE
NUMBER-OF-PEOPLE INFORMATION — S12

ACQUIRE
BIOMETRIC INFORMATION — S13

PREDICT $CO_2$ CONCENTRATION AFTER
CERTAIN PERIOD OF TIME BASED ON — S14
RESULT OF LEARNING BY LEARNING UNIT

CONTROL VENTILATING DEVICE BASED
ON $CO_2$ CONCENTRATION PREDICTED — S15

END

# FIG. 8

# FIG. 9A

FIG. 9B

FIG. 9C

FIG. 10

FIG. 11

START

ACQUIRE
ENVIRONMENTAL INFORMATION — S21

ACQUIRE
NUMBER-OF-PEOPLE INFORMATION — S22

PREDICT $CO_2$ CONCENTRATION AFTER
CERTAIN PERIOD OF TIME BASED ON — S23
RESULT OF LEARNING BY LEARNING UNIT

CONTROL VENTILATING DEVICE BASED
ON $CO_2$ CONCENTRATION PREDICTED — S24

END

FIG. 12

## INTERNATIONAL SEARCH REPORT

| International application No. |
| --- |
| **PCT/JP2022/015676** |

**A.    CLASSIFICATION OF SUBJECT MATTER**

*F24F 11/30*(2018.01)i; *F24F 11/46*(2018.01)i; *F24F 11/64*(2018.01)i; *F24F 7/007*(2006.01)i
FI:    F24F11/64; F24F7/007 B; F24F11/46; F24F11/30

According to International Patent Classification (IPC) or to both national classification and IPC

**B.    FIELDS SEARCHED**

Minimum documentation searched (classification system followed by classification symbols)

F24F11/30; F24F11/46; F24F11/64; F24F7/007

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | WO 2015/173842 A1 (MITSUBISHI ELECTRIC CORP) 19 November 2015 (2015-11-19) paragraphs [0010]-[0058], fig. 1-6 | 1-3, 9, 11 |
| Y | | 4-8, 10, 12 |
| Y | JP 2020-144628 A (PANASONIC IP MAN CORP) 10 September 2020 (2020-09-10) paragraphs [0042]-[0088], fig. 1-5 | 4-8 |
| Y | JP 11-264590 A (MITSUBISHI ELECTRIC CORP) 28 September 1999 (1999-09-28) paragraphs [0001]-[0034], fig. 1-8 | 10, 12 |
| A | JP 2017-3203 A (TOSHIBA CORP) 05 January 2017 (2017-01-05) entire text, all drawings | 1-12 |
| A | JP 2018-48749 A (TOSHIBA CORP) 29 March 2018 (2018-03-29) entire text, all drawings | 1-12 |
| A | JP 2020-154976 A (JVC KENWOOD CORP) 24 September 2020 (2020-09-24) entire text, all drawings | 1-12 |

☐ Further documents are listed in the continuation of Box C.        ☑ See patent family annex.

| | |
| --- | --- |
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
| --- | --- |
| **27 April 2022** | **17 May 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
**Information on patent family members**

International application No.

**PCT/JP2022/015676**

| Patent document cited in search report | | | Publication date (day/month/year) | Patent family member(s) | Publication date (day/month/year) |
|---|---|---|---|---|---|
| WO | 2015/173842 | A1 | 19 November 2015 | (Family: none) | |
| JP | 2020-144628 | A | 10 September 2020 | (Family: none) | |
| JP | 11-264590 | A | 28 September 1999 | (Family: none) | |
| JP | 2017-3203 | A | 05 January 2017 | (Family: none) | |
| JP | 2018-48749 | A | 29 March 2018 | (Family: none) | |
| JP | 2020-154976 | A | 24 September 2020 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010096382 A